# EUROPEAN PATENT SPECIFICATION

(11) **EP 3 245 057 B1**
(45) Date of publication and mention of the grant of the patent: **17.11.2021**
(21) Application number: 16711366.1
(22) Date of filing: 11.01.2016
(51) Int. Cl.: H01M 50/24, H01M 10/658

(54) **A LAMINATED-STRUCTURE BATTERY INSULATOR**
BATTERIEISOLATOR MIT LAMINIERTER STRUKTUR
ISOLATEUR DE BATTERIE À STRUCTURE STRATIFIÉE

(30) Priority: 13.01.2015 TR 201500386
(43) Date of publication of application: 22.11.2017
(73) Proprietor: Pimsa Otomotiv Anonim Sirketi, Kocaeli (TR)
(72) Inventor: ÖZEN, Emre, Kocaeli (TR); INCEKARA, Emre, Kocaeli (TR); TAK, Ramazan, Kocaeli (TR); SEYMAN, Ömür, Kocaeli (TR)
(74) Representative: Yamankaradeniz, Kemal
(86) International application number: PCT/TR2016/050009
(87) International publication number: WO 2016/114737

(56) References cited:
- CN-Y- 201 082 935
- KR-U- 20100 008 593
- US-A1- 2013 277 146

## Description

### The Related Art

The invention relates to battery insulators used around engines, vehicle inner trims, and insulation parts in order to ensure heat and sound insulation for batteries.

The invention particularly relates to providing insulation by using felt and polyurethane layers in insulation materials used for heat insulation of batteries.

### The Prior Art

In the prior art, batteries found in motor vehicles lose their capacities under cold weather conditions and don't work from time to time. Besides, they have the risk of explosion in situations like overheating. Therefore, batteries should be operated at their optimum efficiency interval, which is between +10° to -30°C. Various kinds of covers are used in batteries for heat insulation. The covers used in the prior art comprise multiple layers made of various materials. This leads to increase in the workmanship and costs of battery insulators.

In the literature, one of the patents about this subject is the patent application No. EP0676818. In the relevant application, a battery insulation container comprising an insulating cover made of polyurethane and a lid that completely covers the top surface is disclosed. The lid attached to the cover via two clips and holes are found on the lid in order to provide battery connections.

KR 2010 0008593 U **numbered document** relates to a sound insulating material, and more particularly to a sound insulating material formed on the outer surface of a polyurethane foam by a synthetic rubber felt layer obtained by mixing asphalt and rubber. Object of this invention is to provide a sound insulating material which can remove noise uniformly and reduce noise effectively. It discloses a material designed to provide sound insulation generated in motor vehicles. The mentioned mixture can be used for sound insulation. However, due to having low heat resistaance, it cannot be used for heat resistance in the battery insulator.

US 2013/277146 A1 **numbered document** relates to a convergence sound-absorbing material and a method of fabricating the same. On the other hand, the mentioned document discloses a sound absorbing material made of recycled materials, intended to be used for sound insulation in motor vehicles. The filling material between the upper and lower layers comprises PET with low melting point. Even though the mentioned layers provide sound insulation, they cannot be used for heat insulation since they do not possess high heat resistance.

As a result, the above said drawbacks and the inadequacy of the prior art solutions about the subject have necessitated an improvement in the related technical field.

### Purpose of the Invention

The invention relates to a battery insulator, which meets the above said requirements, eliminates all of the drawbacks, and brings some additional advantages.

The primary purpose of the invention is to provide a battery insulator for motor vehicles, which is cost-efficient, insulant, highly fire-resistant, durable against high temperatures.

A purpose of the invention is to ensure easy mounting due to the single-piece structure of the battery insulator according to the invention. In this way, a highly servable product is obtained.

Another purpose of the invention is to obtain a light, but strong and durable battery insulator due to the materials it is made of.

In order to achieve the above said purposes, a battery insulator is developed, which is used around engines, vehicle inner trims, and insulation parts; and comprises a foam layer and at least two felt layers consisting of an outer felt layer and an inner felt layer, which contain said foam layer in between. The felt layers are made of synthetic/natural felts or minerals.

The structural and characteristic features of the invention and all of its advantages shall be understood better with the figures and the detailed description given below in reference to the figures, and therefore, the assessment should be made by taking into account the said figures and detailed explanations.

### Figures for Better Understanding of the Invention

Figure 1 is a section showing the layers of the battery insulator according to the invention.
Figure 2 is another section showing the layers of the battery insulator according to the invention.

Drawings do not have to be scaled and details not necessary for understanding the present invention may be neglected. Moreover, components which are at least widely equal or which have at least widely equal functions are shown with the same number.

### Description of Parts References

### A. Battery insulator

1. Felt layer
   10. Outer felt layer
   20. Inner felt layer
2. Foam layer

### Detailed Description of the Invention

In this detailed description, the preferred embodiments of the battery insulator according to the invention are only disclosed for better understanding of the subject without forming any limiting effect.

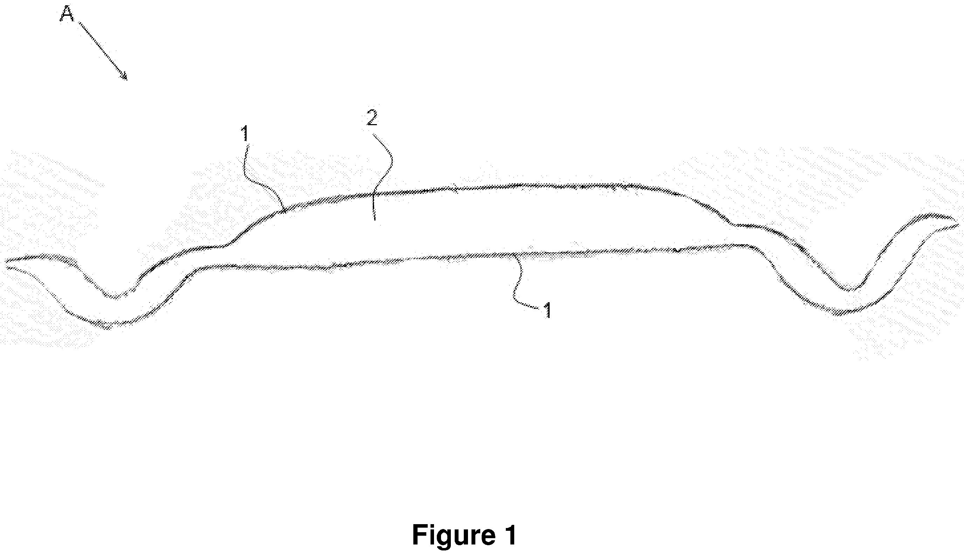

The invention relates to a battery insulator (A) used around engines, vehicle inner trims, and insulation parts in order to ensure heat and sound insulation for batteries. The battery insulator (A) according to the invention comprises at least one foam layer (2) found in between at least two felt layers (1). Figure 1 shows the layers of the battery insulator (A) according to the invention.

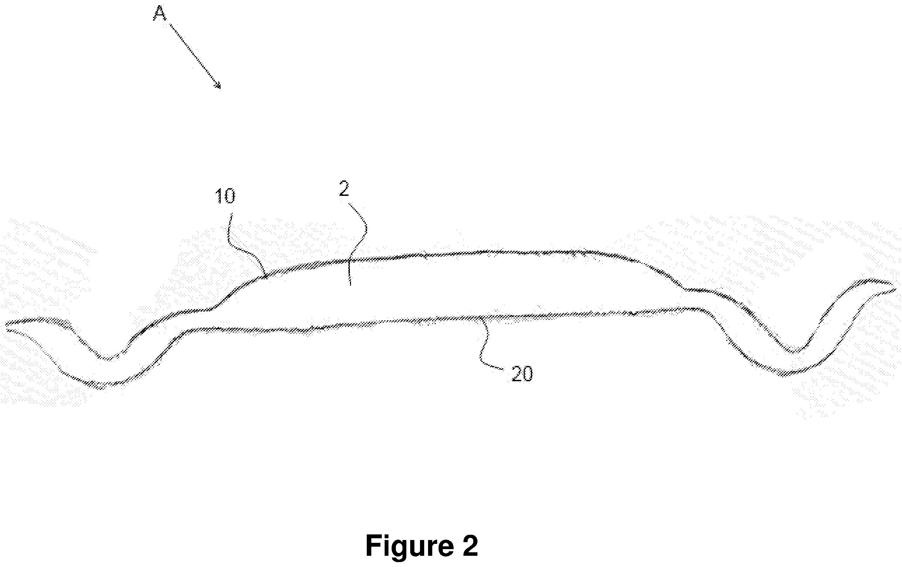

Said felt layer (1) provides durability against chemicals. Synthetic/natural fibers or minerals are used as the felt layer (1). As natural fibers, cotton, linen, jute etc. materials and combinations thereof can be used. Since said felt layer (1) wraps around the foam layer (2) like a sandwich, an inner felt layer (20) and an outer felt layer (10) are formed. As mineral, mineral wool, rockwool, or glassfiber can be used. Figure 2 provides a section where an inner felt layer (20) and an outer felt layer (10) can be seen. The thickness of said outer felt layer (10) is between 0.35 - 0.95 mm. The thickness of said inner felt layer (20) is between 0.20 - 0.80 mm.

The foam layer (2) both ensures low density, contributes to the nonflammability, and incorporates shapeable characteristics to the general structure. As the foam layer (2), polyurethane with various densities orsynthetic foams can be used. As the synthetic foam, PP (polypropylene), PE (polyethylene), PES (polyethersulphone), or cross linked PE (polyethylene) foam can be used. In a preferred embodiment of the invention; PU (polyurethane) foam is used due to its low density and nonflammability characteristics. The density of said polyurethane foam is 10-20 g/dm³. The thickness of said foam layer (2) is between 7-30 mm.

Among said materials, the felt layer (1) and the foam layer (2) are cut in desired sizes by means of a mould. A sandwich structure is formed by placing the foam layer (2) that is already cut in between the two felt layers (1). Afterwards, with the help of a press machine and a shaping mould, shaping (forming) under heat and pressure and peripheral welding is made. Then, the final form is given by cutting.

## Claims

1. A battery insulator (A) suitable for using around engines, vehicle inner trims, and insulation parts, comprising: a foam layer (2), and
**characterized in that** the battery insulator (A) comprises
• at least two felt layers (1) which are made of synthetic/natural felts or minerals, and consisting of an outer felt layer (10) and an inner felt layer, which contain said foam layer (2) in between.

2. A battery insulator (A) according to Claim 1, **characterized in that**; said natural felt is selected from the group consisting of natural fibers and felts, cotton, linen, jute, and combinations thereof.

3. The battery insulator (A) according to Claim 1, **characterized in that**; said mineral is mineral wool, rockwool, or glassfiber.

4. A battery insulator (A) according to any of preceding Claims 1, 2 or 3, **characterized in that**; said foam layer (2) is made of polyurethane or synthetic foams.

5. The battery insulator (A) according to Claim 4, **characterized in that**; said synthetic foam is PP (polypropylene), PE (polyethylene), PES (polyethersulphone), or cross linked PE (polyethylene) foam.

6. A battery insulator (A) according to Claim 1, **characterized in that**; said foam layer (2) is polyurethane foam.

7. A battery insulator (A) according to Claim 6, **characterized in that**; the density of said polyurethane foam is 10 - 20 g/dm³.

8. A battery insulator (A) according to Claim 1, **characterized in that**; the thickness of said outer felt layer (10) is between 0.35 - 0.95 mm.

9. A battery insulator (A) according to Claim 1, **characterized in that**; the thickness of said inner felt layer (20) is between 0.20 - 0.80 mm.

10. A battery insulator (A) according to Claim 1, **characterized in that**; the thickness of said foam layer (2) is between 7 - 30 mm.

11. Method of production of the battery insulator (A) according to Claim 1, **characterized in that**; it comprises the operation steps of:
- cutting the felt layer (1) and the foam layer (2),
- placement of the outer felt layer (10) and the inner felt layer (20), which form the felt layers, at the outer part of the foam layer (2) and at the inner part of the foam layer (2), respectively, and
- performing peripheral welding under heat and pressure.

12. The battery insulator (A) production method according to Claim 11, **characterized in that**; it comprises the operation steps of shaping under heat and pressure, peripheral welding, and forming by cutting.

## Patentansprüche

1. Batterieisolator (A), geeignet zur Verwendung um Motoren, Fahrzeuginnenverkleidungen, und Isolierteile, umfassend: eine Schaumschicht (2), und
**dadurch gekennzeichnet, dass** der Batterieisolator (A) umfasst
• mindestens zwei Filzschichten (1), die aus synthetischen/natürlichen Filzen oder Mineralien hergestellt sind und aus einer äußeren Filzschicht (10) und einer inneren Filzschicht bestehen, die die Schaumschicht (2) dazwischen enthalten.

2. Batterieisolator (A) nach Anspruch 1, **dadurch gekennzeichnet, dass**; der natürliche Filz aus der Gruppe bestehend aus natürlichen Fasern und Filzen, Baumwolle, Leinen, Jute und Kombinationen davon ausgewählt ist.

3. Batterieisolator (A) nach Anspruch 1, **dadurch gekennzeichnet, dass**; das Mineral Mineralwolle, Steinwolle oder Glasfaser ist.

4. Batterieisolator (A) nach einem der vorhergehenden Ansprüche 1, 2 oder 3, **dadurch gekennzeichnet, dass**; die Schaumschicht (2) aus Polyurethan oder synthetischen Schäumen hergestellt ist.

5. Batterieisolator (A) nach Anspruch 4, **dadurch gekennzeichnet, dass**; der synthetische Schaum PP- (Polypropylen-), PE- (Polyethylen-), PES- (Polyethersulfon-) oder vernetzter PE-(Polyethylen-) Schaum ist.

6. Batterieisolator (A) nach Anspruch 1, **dadurch gekennzeichnet, dass**; die Schaumschicht (2) Polyurethanschaum ist.

7. Batterieisolator (A) nach Anspruch 6, **dadurch gekennzeichnet, dass**; die Dichte des Polyurethanschaums 10 - 20 g/dm³ beträgt.

8. Batterieisolator (A) nach Anspruch 1, **dadurch gekennzeichnet, dass**; die Dicke der äußeren Filzschicht (10) zwischen 0,35 - 0,95 mm beträgt.

9. Batterieisolator (A) nach Anspruch 1, **dadurch gekennzeichnet, dass**; die Dicke der inneren Filzschicht (20) zwischen 0,20 - 0,80 mm beträgt.

10. Batterieisolator (A) nach Anspruch 1, **dadurch gekennzeichnet, dass**; die Dicke der Schaumschicht (2) zwischen 7 - 30 mm beträgt.

11. Verfahren zur Herstellung des Batterieisolators (A) nach Anspruch 1, **dadurch gekennzeichnet, dass**; es die Arbeitsschritte umfasst:
- Schneiden der Filzschicht (1) und der Schaumschicht (2),
- Anordnen der äußeren Filzschicht (10) und der inneren Filzschicht (20), die die Filzschichten bilden, am äußeren Teil der Schaumschicht (2) bzw. am inneren Teil der Schaumschicht (2), und
- Durchführen eines Umfangsschweißens unter Hitze und Druck.

12. Herstellungsverfahren für einen Batterieisolator (A) nach Anspruch 11, **dadurch gekennzeichnet, dass**; es die Arbeitsschritte des Umformens unter Hitze und Druck, des Umfangsschweißens und des Umformens durch Schneiden umfasst.

## Revendications

1. Isolateur de batterie (A) adapté pour être utilisé autour de moteurs, de garnitures internes de véhicule et de parties d'isolation, comprenant : une couche de mousse (2), et
**caractérisé en ce que** l'isolateur de batterie (A) comprend
• au moins deux couches de feutre (1) qui sont constituées de feutres synthétiques/naturels ou minéraux, et constituées d'une couche de feutre externe (10) et d'une couche de feutre interne, qui contiennent ladite couche de mousse (2) entre elles.

2. Isolateur de batterie (A) selon la revendication 1, **caractérisé en ce que** ; ledit feutre naturel est choisi dans le groupe constitué de fibres naturelles et de feutres, de coton, de lin, de jute et des combinaisons de ceux-ci.

3. Isolateur de batterie (A) selon la revendication 1, **caractérisé en ce que** ; ledit minéral est de la laine minérale, de la laine de roche ou de la fibre de verre.

4. Isolateur de batterie (A) selon l'une quelconque des revendications précédentes 1, 2 ou 3, **caractérisé en ce que** ; ladite couche de mousse (2) est constituée de polyuréthane ou de mousse synthétique.

5. Isolateur de batterie (A) selon la revendication 4, **caractérisé en ce que** ; ladite mousse synthétique est une mousse de PP (polypropylène), de PE (polyéthylène), de PES (polyéthersulfone) ou de PE (polyéthylène) réticulée.

6. Isolateur de batterie (A) selon la revendication 1, **caractérisé en ce que** ; ladite couche de mousse (2) est de la mousse de polyuréthane.

7. Isolateur de batterie (A) selon la revendication 6, **caractérisé en ce que** ; la densité de ladite mousse de polyuréthane est de 10 à 20 g/dm³.

8. Isolateur de batterie (A) selon la revendication 1, **caractérisé en ce que** ; l'épaisseur de ladite couche de feutre externe (10) est comprise entre 0,35 et 0,95 mm.

9. Isolateur de batterie (A) selon la revendication 1, **caractérisé en ce que** ; l'épaisseur de ladite couche de feutre interne (20) est comprise entre 0,20 et 0,80 mm.

10. Isolateur de batterie (A) selon la revendication 1, **caractérisé en ce que** ; l'épaisseur de ladite couche de mousse (2) est comprise entre 7 et 30 mm.

11. Procédé de fabrication de l'isolateur de batterie (A) selon la revendication 1, **caractérisé en ce que** ; il comprend les étapes opératoires de :
- découpe de la couche de feutre (1) et de la couche de mousse (2),
- mise en place de la couche de feutre externe (10) et de la couche de feutre interne (20), qui forment les couches de feutre, respectivement au niveau de la partie externe de la couche de mousse (2) et au niveau de la partie interne de la couche de mousse (2), et
- réalisation des soudures périphériques sous chaleur et pression.

12. Procédé de fabrication d'isolateur de batterie (A) selon la revendication 11, **caractérisé en ce que** ; il comprend les étapes opératoires de façonnage à chaud et sous pression, de soudage périphérique et de formage par découpage.
